(19) **Europäisches Patentamt**

**European Patent Office**

**Office européen des brevets**

(11) Veröffentlichungsnummer : **0 126 404**
**B1**

(12) # EUROPÄISCHE PATENTSCHRIFT

(45) Veröffentlichungstag der Patentschrift :
27.07.88

(51) Int. Cl.⁴ : **C 08 G 63/76, C 08 G 63/20, C 09 D 5/02**

(21) Anmeldenummer : **84105467.9**

(22) Anmeldetag : **14.05.84**

(54) Verfahren zur Herstellung von hydroxylgruppenhaltigen Alkydharzen und deren wässrigen Zubereitungen.

(30) Priorität : 21.05.83 DE 3318595

(43) Veröffentlichungstag der Anmeldung :
28.11.84 Patentblatt 84/48

(45) Bekanntmachung des Hinweises auf die Patenterteilung : 27.07.88 Patentblatt 88/30

(84) Benannte Vertragsstaaten :
AT BE CH DE FR GB IT LI LU NL SE

(56) Entgegenhaltungen :
DE-A- 2 815 096
DE-A- 2 922 370
FR-A- 1 386 701
GB-A- 1 075 081
US-A- 4 054 614
Die Akte enthält technische Angaben, die nach dem Eingang der Anmeldung eingereicht wurden und die nicht in dieser Patentschrift enthalten sind.

(73) Patentinhaber : Henkel Kommanditgesellschaft auf Aktien
Postfach 1100 Henkelstrasse 67
D-4000 Düsseldorf-Holthausen (DE)

(72) Erfinder : Fischer, Herbert, Dr.
Am Nettchesfeld 14
D-4000 Düsseldorf 13 (DE)
Erfinder : Gorzinski, Manfred
Bogenstrasse 6
D-4000 Düsseldorf (DE)
Erfinder : Gress, Wolfgang
Westfalenweg 247
D-5600 Wuppertal-Elberfeld (DE)
Erfinder : Meffert, Alfred, Dr.
Marie-Curie-Strasse 10
D-4019 Monheim (DE)
Erfinder : Wegemund, Bernd, Dr.
Händelweg 3
D-5657 Haan 1 (DE)

**Beschreibung**

Die Erfindung liegt auf dem Gebiet der Wasserlacke. Sie schlägt neue nach einem speziellen Verfahren gewonnene Alkydharze vor, die neue einbrennbare Emulgatoren enthalten können und zu besonders umweltfreundlichen Wasserlacken verarbeitbar sind.

Es ist bekannt, daß Alkydharze mit hoher Hydroxyzahl (größer 100) und einer merklichen Restsäurezahl zur Herstellung besonders umweltfreundlicher ofentrocknender Wasserlacksysteme verwendet werden können. Zur Herstellung derartiger Alkydharze ist es dabei üblich, von Harzen mit hoher Säurezahl, z. B. 30-180 auszugehen, und durch Kondensation mit OH-gruppenhaltigen oder OHgruppenliefernden Substanzen die gewünschten Harze zu erzeugen.

So wird in der britischen Patentschrift 1 038 696 vorgeschlagen, saure Harze, die Polyethylenglykoleinheiten enthalten, durch Umsetzung mit mehrfunktionellen Alkoholen zu einer Säurezahl kleiner 10 zu kondensieren. So hergestellte Alkydharze sind nach Neutralisation mit z. B. Aminen selbst emulgierend und können zu Wasserlacken verarbeitet werden, welche jedoch nach Einbrennen nicht die gewünschte Wasserfestigkeit aufweisen. Ein weiterer Nachteil der Systeme liegt darin, daß beim Pigmentieren oftmals Unverträglichkeiten auftreten, die sich in Glanzstörungen äußern.

Hydroxylgruppenhaltige Alkydharze mit Säurezahl zwischen 5 und 35, insbesondere 15 bis 30, sind Gegenstand der deutschen Patentschrift 28 42 919. Dort wird vorgeschlagen, ein säuregruppenhaltiges Harz mit Ausgangssäurezahl 30 bis 180 mit Glycid zu verestern. Wenngleich auf diesem Wege Bindemittel mit günstigen Eigenschaften zugänglich sind, so ist doch die Verwendung von Glycid problematisch, da dieser Rohstoff schwer zugänglich und schwer zu handhaben ist.

Aus der DE-A 28 15 096 ist bereits ein Verfahren zur Herstellung wasserlöslicher Alkydharze bekannt, bei dem in einem ersten Schritt Fettsäuren/Carbonsäuren mit Alkoholen zu Polyestern der Säurezahl kleiner 2 umgesetzt werden, die in einem zweiten Schritt durch Kondensation mit Carbonsäuren zu Alkydharzen der Säurezahl 25-80 umgesetzt werden. Derartige Alkydharze weisen eine geringe Anzahl von Hydroxylgruppen auf, da viele Hydroxylgruppen beim zweiten Herstellungsschritt verbraucht werden. Lacke auf Basis derartiger Harze weisen im Vergleich zu den Produkten auf Basis von hydroxylgruppenhaltigen Alkydharzen meist geringere Wasserfestigkeit auf.

Die deutsche Offenlegungsschrift 29 22 370 schlägt vor, ein saures Harz mit Säurezahl 30 bis 180 unter Verwendung von Glycerin bis zu einer Säurezahl von 5-35, insbesondere 15-30, zu kondensieren. Die Harze lassen sich nach Neutralisation zu klaren lösungsmittelfreien, wäßrigen Zubereitungen verarbeiten. Doch sind diese gegen Calciumionen empfindlich, welche z. B. bei der Pigmentierung mit Calciten eingeschleppt werden. Ein weiterer Nachteil liegt in der für viele Anwendungen immer noch zu geringen Wasserfestigkeit der Systeme. Es besteht daher ein Bedürfnis nach einem neuen Wasserlacksystem auf Basis eines Harzes mit Säurezahl unter 40 und hoher OH-Zahl, welches in einfacher Weise aus gut zugänglichen Rohstoffen hergestellt werden kann, auch mit Calcit pigmentierbar ist, sowie die zu fordernde Wasserfestigkeit aufweist.

Aufgabe der Erfindung ist es, somit ein Verfahren zu schaffen, welches die Herstellung verbesserter Alkydharze für Wasserlacke gestattet, die Säurezahlen zwischen 10 und 40 aufweisen und nach Neutralisation mit Aminoalkoholen in Abwesenheit organischer Lösungsmittel gegebenenfalls unter Verwendung von Emulgatoren, welche die Wasserfestigkeit des festen Lackfilms nicht herabsetzen, zu klaren, wäßrigen Zubereitungen konfektionierbar sind. Eine weitere Aufgabe der Erfindung ist es, ein Verfahren zur Herstellung derartiger wäßriger Zubereitungen sowie dafür besonders geeignete Emulgatoren mit hoher solubilisierender Wirkung aufzuzeigen.

Gegenstand der Erfindung ist somit ein Verfahren zur Herstellung wäßriger Alkydharzzubereitungen, bei dem man ein Vorkondensat der Säurezahl 50 bis 130 durch Reaktion mit Alkoholen der Funktionalität größer 2 zu einem hydrophilen Alkydharz mit Säurezahl kleiner 40 kondensiert (Reaktionsstufe c) und dieses in Gegenwart von Aminoalkoholen und gewünschtenfalls OH-funktionellen Emulgatoren in Wasser dispergiert (Reaktionsstufe d), dadurch gekennzeichnet, daß man zur Herstellung des Vorkondensates

a) Fettsäuren und/oder mehrfunktionelle Carbonsäuren oder deren reaktive Derivate mit mehrfunktionellen Alkoholen zu einem Polyester mit Hydroxylendgruppen und Säurezahl kleiner 2 umsetzt und

b) den Polyester durch Reaktion mit mehrfunktionellen Carbonsäuren und/oder deren reaktiven Derivaten in das Vorkondensat mit Säurezahl zwischen 50 und 130 umwandelt.

Das erfindungsgemäße Verfahren folgt somit zunächst der Lehre der deutschen Offenlegungsschrift 29 22 370. So ist vorgesehen, ein Vorkondensat herzustellen, welches eine relativ hohe Säurezahl aufweist und dieses unter Verwendung von hydrophilen Polyolen, wozu auch Glycerin zu zählen ist, bis zu einer Endsäurezahl im angestrebten Bereich zu kondensieren. Der Erfindung liegt darüber hinaus die Erkenntnis zugrunde, daß nur bei Auswahl spezieller Vorkondensatharze, nämlich solcher mit einer Säurezahl im Bereich zwischen 50 und 130, insbesondere zwischen 60 und 90, mit einem nur durch ein zweistufiges Herstellungsverfahren erreichbaren molekularen Aufbau, die gewünschten Ergebnisse zu erreichen sind.

0 126 404

Zwar sind die der Erfindung zugrunde liegenden theoretischen Zusammenhänge nicht untersucht, doch wird vermutet, daß durch die zweistufige Kondensationsweise bei der Herstellung der Vorkondensate eine engere Molekulargewichtsverteilung erreicht wird und insbesondere der Gehalt an freien Fettsäuren gesenkt wird.

## Reaktionsstufe a)

Erfindungsgemäß werden zur Herstellung der Vorkondensate zunächst Fettsäuren und/oder deren reaktive Derivate mit mehrfunktionellen Alkoholen und gewünschtenfalls mehrfunktionellen Carbonsäuren oder deren reaktiven Derivaten in dem Fachmann bekannter Weise verestert. Die Veresterung wird bis zu einer Säurezahl nahe 0 durchgeführt, so daß Polyester mit Hydroxylendgruppen entstehen.

Die Auswahl der Rohstoffe ist in dieser ersten Stufe wenig kristisch. So können als Fettsäuren durch Verseifung natürlich vorkommender Triglyceride zugängliche Schnitte kurzkettiger oder langkettiger Fettsäuren mit hohem oder niederem Anteil an ungesättigten Verbindungen eingesetzt werden. Weiterhin ist es möglich, synthetische verzweigte Fettsäuren oder andere langkettige Carbonsäuren mit mehr als 6 C-Atomen einzusetzen.

Wahlweise können bereits in der ersten Stufe mehrfunktionelle Carbonsäuren und/oder deren reaktive Derivate eingesetzt werden. Verwendet werden können hier sowohl aliphatische Di- und/oder Tricarbonsäuren wie aromatische Di- und/oder Tricarbonsäuren. Beispiele sind Glutarsäure, Adipinsäure, Sebacinsäure und deren Homologe sowie Phthalsäure und deren Isomere oder Trimellitsäure. An reaktiven Derivaten werden hauptsächlich die Anhydriden eingesetzt. Bevorzugt sind cyclische Anhydride, z. B. Maleinsäureanhydrid.

Als mehrfunktionelle Alkohole finden die dem Alkydharzfachmann bekannten Polyole Anwendung. So sind Glykole geeignet, wie Ethylenglykol, Propylenglykol, Neopentylglykol und deren Dimere oder Trimere, Homologe mit bis zu 8 C-Atomen sowie deren Isomere. Besonders geeignet sind Neopentylglykol und/oder Diethylenglykol oder Dipropylenglykol.

Weiterhin können Alkohole der Funktionalität 3 und höher verwendet werden, wie beispielsweise Glycerin, Trimethylolethan, Trimethylolpropan, Pentaerythrit, Dipentaerythrit, Sorbit oder andere Zuckeralkohole.

Die Kondensation wird nach gängigen Verfahren durchgeführt, so kann z. B. in Gegenwart eines aromatischen Lösungsmittels, welches später wieder abdestilliert wird, Reaktionswasser azeotrop ausgekreist werden, auch kann das Reaktionswasser im Stickstoffstrom entfernt werden. Weiterhin ist es möglich, die Veresterungsreaktion zu katalysieren. Geeignete Katalysatoren sind starke Säuren, wie z. B. Sulfonsäure oder auch Schwefelsäure. Die Veresterungsreaktion findet bei Temperaturen von 120-220 °C, vorzugsweise von 140-200 °C statt, wobei kondensiert wird, bie praktisch alle verfügbaren Carboxylgruppen verschwunden sind, d. h. bis die Säurezahl weniger als 2 beträgt.

## Reaktionsstufe b)

Die in der ersten Stufe des erfindungsgemäßen Verfahrens hergestellten Polyester mit Hydroxylendgruppen werden in einer zweiten Stufe in saure Vorkondensate umgewandelt. Hierzu wird bei Temperaturen zwischen 140 und 200 °C mit Anhydriden von Di- und Tricarbonsäuren umgesetzt. Dabei wird ein Teil der Hydroxylendgruppen des Polyesters in Carboxylendgruppen umgewandelt. Je nach angewandten Reaktionsbedingungen, also Temperatur- und Reaktionszeit, kann in dieser Stufe jedoch unter Erhöhung des Molekulargewichts auch weiter kondensiert werden. Die eingesetzte Menge an Di- und/oder Tricarbonsäureanhydriden in der zweiten Stufe ist so zu bemessen, daß die Säurezahl des erhaltenen Vorkondensats zwischen 50 und 130 liegt. Erfindungsgemäß werden jedoch vorzugsweise Harze mit Säurezahl 60 bis 90 hergestellt. Die in Reaktionsstufe b) verwendeten Anhydriden von Di- und/oder Tricarbonsäuren oder von Carbonsäuren mit höherer Funktionalität 4 entsprechen den bereits in der ersten Reaktionsstufe eingesetzten Produkten. Bevorzugt sind auch hier cyclische Anhydride, wie z. B. Bernsteinsäureanhydrid, Glutarsäureanhydrid, Maleinsäureanhydrid, Phthalsäureanhydrid oder Trimellitsäureanhydrid.

## Reaktionsstufe c)

Das Vorkondensat mit Carbonsäureendgruppen aus der zweiten Stufe wird erfindungsgemäß in einer dritten Stufe unter Verwendung von Alkoholen der Funktionalität größer 2 zu einem hydroxylgruppenhaltigen Alkydharz weiter kondensiert. Die Reaktionsbedingungen entsprechen dabei bezüglich Temperatur und Reaktionsführung den bei der ersten Stufe beschriebenen Bedingungen.

Es ist bereits bekannt, saure Vorkondensate mit Glycerin, Trimethylolpropan oder Pentaecrythrit zu hydrophilieren.

Erfindungsgemäß können jedoch als Alkohole der Funktionalität größer 2 außer den genannten in der Reaktionsstufe c) zahlreiche Verbindungen eingesetzt werden. So werden nach einer ersten Ausführungsform der Erfindung Triole eingesetzt. Geeignete Triole sind ausser Glycerin, Trimethylolpropan oder Trimethylolethan z. B. deren Umsetzungsprodukte mit bis zu 5 mol Ethylenoxid und/oder

3

Propylenoxid.

Nach einer weiteren Ausführungsform der Erfindung werden tetrafunktionelle Alkohole eingesetzt. Geeignet sind hier z. B. Pentaerythrit sowie die Dimerisierungsprodukte von Glycerin, Trimethylolpropan oder Trimethylolethan. Weiterhin können auch die Umsetzungsprodukte aller genannter tetrafunktionellen Alkohole mit bis zu 5 mol Ethylenoxid und/oder Propylenoxid eingesetzt werden.

Eine weitere Ausführungsform der Erfindung betrifft die Verwendung von Alkoholen mit mehr als 4 und bis zu 10 OH-Gruppen. Einschränkend ist hier ein Molekulargewicht unter 1 000 zu fordern. Geeignete Alkohole sind Zuckeralkohole, wie z. B. Sorbit, ferner die als Polyglycerin bezeichneten Kondensationsprodukte des Glycerins mit 2 bis 4 Ethersauerstoffen sowie Dipentaerythrit und die Umsetzungsprodukte der genannten Alkohole mit bis zu 10 mol Ethylenoxid und/oder Propylenoxid.

Die Veresterung des säuregruppenhaltigen Vorkondensats mit den Alkoholen mit mehr als 2 Hydroxylgruppen wird durchgeführt, bis eine Säurezahl zwischen 10 und 40 erreicht ist. Bevorzugt sind jedoch Säurezahlen zwischen 15 und 35, insbesondere zwischen 20 und 25.

## Reaktionsstufe d)

Die so hergestellten Alkydharze können nach Neutralisation und gewünschtenfalls nach Zugabe von Emulgatoren zu meist klaren, wäßrigen Zubereitungen konfektioniert werden. Zur Neutralisation sind Amine geeignet. Bevorzugt sind Aminoalkohole. So können z. B. die in der britischen Patentschrift 1 003 326 genannten Aminoalkohole, wie 2-Methyl-2-aminopropanol, 2-Methyl-2-amino-propandiol oder Tris-hydroxymethylaminomethan eingesetzt werden. Weiterhin geeignet sind deren Umsetzungsprodukte mit Ethylenoxid. Geeignet sind auch Di- und Triethanolamin sowie Methyldiethanolamin und andere üblicherweise in Wasserlacken verwendeten nicht-flüchtige Amine.

Es ist nicht in jedem Falle nötig, den erfindungsgemäßen Harzen zur Konfektionierung in Wasser Emulgatoren zuzusetzen, doch empfiehlt sich die Maßnahme, wenn die Harze längerkettige Fettsäuren, also solche mit einer durchschnittlichen Kettenlänge größer C 16 enthalten. Um die anwendungstechnischen Eigenschaften der Lackfilme nicht negativ zu beeinflussen, sind hier solche Emulgatoren bevorzugt, die unter Kondensationsbedingungen in das Harz eingebaut werden. So können z. B. Emulgatoren verwendet werden, welche zahlreiche Hydroxylgruppen aufweisen oder solche, die unter Reaktionsbedingungen in nicht mehr hydrophile Bruchstücke zerfallen. Entsprechende Emulgatoren sind in der eingangs erwähnten deutschen Offenlegungsschrift 29 22 370 genannt.

Zur Verarbeitung der erfindungsgemäßen Harze besonders geeignete Emulgatoren sind die Salze von Aminoalkoholen mit 9,10-Hydroxyalkoxystearinsäuren, welche im Alkoxyrest mindestens eine weitere OH-Gruppe aufweisen. Obwohl diese Verbindungen nicht den klassischen Aufbau eines Emulgators zeigen, haben sie doch hervorragende Solubilisierungswirkung und sind daher für Wasserlacke besonders geeignet. Die Verbindungen verlieren zudem beim Einbrennen ihre Hydrophilie, indem sie sowohl über Hydroxylgruppen als auch über die Säuregruppe in das Harz eingebaut werden.

Die Herstellung der Emulgatoren ist einfach. Es werden 9,10-Epoxystearinsäureester zunächst mit einem Überschuß an mehrfunktionellen Alkoholen unter Ringöffnung und Umesterung umgesetzt. Danach wird zur freien Säure verseift und mit dem gewünschten Aminoalkohol neutralisiert. Für die Zwecke der vorliegenden Erfindung sind solche Hydroxyalkoxystearinsäuren geeignet, deren Alkoxyrest sich von Glykolen, wie Ethylenglykol, Propylenglykol oder deren Homologe abgeleitet. Bevorzugt sind Hydroxyalkoxystearinsäuren, deren Alkoxyrest sich von den Alkoholen mit Funktionalität größer 2 ableitet, welche in der driten Reaktionsstufe bei der Herstellung der erfindungsgemäßen Alkydharze angewendet werden und vorstehend beschrieben worden sind. Zur Neutralisation der Hydroxyalkoxystearinsäuren werden bevorzugt die gleichen Aminoalkohole wie zur Neutralisation des Harzes verwendet. Nach einer bevorzugten Ausführungsform der Erfindung werden die Hydroxyalkoxystearinsäuren dem Harz am Ende der dritten Reaktionsstufe zugesetzt und dann zusammen mit dem Harz neutralisiert.

Die wäßrigen Zubereitungen der neuen Alkydharze können unter Zugabe von wasserlöslichen Melaminharzen oder Harnstoffformaldehydharzen als Härter und gewünschtenfalls weiterer üblicher Zusätzen zu Wasserlacken verarbeitet werden. Diese sind nach den bei Wasserlacken gängigen Verfahren pigmentierbar. Es ist hervorzuheben, daß auch mit Calcit pigmentiert werden kann. Sowohl Klarlacke wie auch pigmentierte Lacke, auf Basis der erfindungsgemäßen Systeme, können zu Überzügen mit ausgezeichneten Eigenschaften eingebrannt werden. Hier ist insbesondere die hohe Wasserfestigkeit der Lackfilme im Vergleich zum Stand der Technik hervorzuheben.

## Beispiele

### 1. Herstellung von Alkydharzen

Die Kondensation erfolgte in einer heizbaren Veresterungsapparatur, in üblicher Weise unter Stickstoff. Das Reaktionswasser wurde im Stickstoffstrom ausgetrieben.

### Beispiel 1

Es wurden kondensiert :

Stufe a (Vorkondensation) Temperatur 150-220 °C

125,15 kg fraktionierte Kokosfettsäure

(Kettenlängenverteilung :

6 Gew.-% Caprylsäure

6 Gew.-% Caprinsäure

48 Gew.-% Laurinsäure

18 Gew.-% Myristinsäure

16 Gew.-% Palmitinsäure

2 Gew.-% Stearinsäure

8 Gew.-% Ölsäure)

49,46 kg Trimethylolpropan

110,25 kg Umsetzungsprodukt von Trimethylolpropan mit 6 mol Propylenoxid

165,08 kg Neopentylglykol

0,60 kg 4-Toluolsulfonsäure

Es wurde kondensiert bis die Säurezahl unter 1 gefallen war. Dabei wurden 12,51 kg Kondensat (Reaktionswasser) erhalten.

Stufe b (Hauptkondensation) Temperatur 150-220 °C

147,20 kg Phtalsäureanhydrid

114,42 kg Trimellitsäureanhydrid

Es wurde bis zu einer Säurezahl 78 kondensiert. Dabei wurden 22,05 kg Kondensat erhalten.

Stufe c (Nachkondensation) Temperatur 150-220 °C

150,77 kg Umsetzungsprodukt von Dipentaerythrit mit 5 mol Ethylenoxid

Es wurde kondensiert bis die Säurezahl 28 erreicht war. Dabei wurden 14,30 kg Kondensat abgeschieden.

Stufe d (Herstellung einer 85 %igen wässrigen Zubereitung) Temperatur 80-90 °C

36,35 kg 2-Amino-2-methylpropanol

150,18 kg Wasser

Es wurden 100 kg einer 85 %igen wässrigen Harzzubereitung erhalten.

## Beispiel 2

Es wurde wie in Beispiel 1 verfahren, jedoch wurde die fraktionierte Kokosfettsäure molmäßig durch eine selektiv gehärtete Talgfettsäure ersetzt. Kettenlängenverteilung :

3 % Myristinsäure

26 % Palmitinsäure

24 % Stearinsäure

40 % Ölsäure

Die Säurezahl nach der Reaktionsstufe b betrug 76,5.

In Reaktionsstufe c wurde Dipentaerythrit-5-ethylenoxid so durch Glycerin ersetzt, daß die Anzahl an Hydroxylgruppen konstant blieb. Es wurde bis zu einer Säurezahl von 25,0 kondensiert.

Stufe d

Zur Herstellung einer wäßrigen Zubereitung wurden 500 g Alkydharz mit 19,3 g 2-Amino-2-methylpropanol versetzt. Es wurden 70 g Wasser zugegeben sowie als Emulgator das Salz von 2-Amino-2-methylpropanol und einer 9,10-Hydroxyalkoxystearinsäure, deren Alkoxyrest sich von Trimethylolpropan ableitet.

## Beispiel 3

Es wurde verfahren wie in Beispiel 2, jedoch wurde die selektiv gehärtete Talgfettsäure durch die äquimolare Menge einer fraktionierten Fettsäure folgender Kettenlängenverteilung ersetzt.

60 Gew.-% Caprylsäure

35 Gew.-% Caprinsäure

3 Gew.-% Laurinsäure

2 Gew.-% höhere Fettsäuren

In Stufe c wurde die Glycerinmenge um 5 mol-% erhöht. Die Säurezahl nach Ende der Stufe b betrug 86,9, nach Ende der Stufe c 27,9.

2. Herstellung eines Weißlackes

Im Dissolver wurde eine Malpaste hergestellt aus (Gew.-Teile)

50 Teile Alkydharz, 85 %ig in Wasser

32 Teile deionisiertes Wasser

30 Teile Pigmentationshilfsmittel (9 Teile einer 30 %igen säuregruppentragenden, niedermolekularen Acrylatdispersion-Primal-I-94, Rohm & Haas Co- und 1 Teil 2-Methyl-2-aminopropanol, 75 Gew.-%ig in

Wasser)

183 Teile Titandioxid (Chronos Titan CL 310)

Aufgelackt wurde mit

309 Teilen Alkydharz, 85 %ig in Wasser

131 Teilen Melaminharz (Cymel 301 American Cyanamid Co)

265 Teilen deionisiertem Wasser

Es wurden 1 000 Teile Weißlack mit einem Alkydharz zu Melaminharz Verhältnis 7 : 3 und einer Pigment-Volumen-konzentration von ca. 11 % erhalten.

3. Prüfung der Überzüge

Zur Prüfung der Filme wurden die Lacke auf Stahlbleche gespritzt und 15, bzw. 30 Minuten bei 160 °C eingebrannt. Die Trockenfilmdicken betrugen 25-40 μm. Die erhaltenen Ergebnisse sind in den Tabellen aufgelistet.

(Siehe Tabellen Seite 7 ff.)

Tabelle

Prüfung der Überzüge

| | Beispiel 1 | | Beispiel 2 | | Beispiel 3 | | Vergleichsbeispiel (Beisp. 1 aus DE-OS 29 22 370) | |
|---|---|---|---|---|---|---|---|---|
| Einbrennzeit + Temperatur | 15'<br>150°C | 30'<br>160°C | 15'<br>160°C | 30'<br>160°C | 15'<br>160°C | 30'<br>160°C | 15'<br>160°C | 30'<br>160°C |
| Filmdicke $\mu$m | 34 | 36 | | 38 | 33 | 33 | 37 | |
| % Glanz 20° | 55 | 51 | | 63 | 67 | 56 | 70 | |
| Pendelhärte (sek.) | 124 | 144 | | 99 | 157 | 175 | 196 | |
| Gitterschnitt | 0 | 0 | | 0 | 0 | 0 | 6-1 | |
| Erichsen- Tiefung (mm) | 6,8 | 4,9 | | 7,3 | 7,1 | 5,4 | 5,6 | |

...

0 126 404

Tabelle (Fortsetzung)

Prüfung der Überzüge

| | Beispiel 1 | | Beispiel 2 | | Beispiel 3 | | Vergleichsbeispiel (Beisp. 1 aus DE-OS 29 22 370) | |
|---|---|---|---|---|---|---|---|---|
| Einbrennzeit + Temperatur | 15 ' 150°C | 30' 160°C | 15' 160°C | 30' 160°C | 15' 160°C | 30' 160°C | 15' 160°C | 30' 160°C |
| Calcitverträglich-keit | + | | | + | + | | − | |
| Bemerkung | | | zu weich | | | | | überbrannt |
| Schwitzkasten: 40°C beurteilt nach DIN 53209 — 24 h | 0 | 0 | | 0 | 0 | 0 | 0 | |
| 48 h | 0 | 0 | | 0 | 0 | 0 | 2/3 m 3 91 | |
| 120 h | 2/3 m 5 91 | 0 | | 0 | 0 | 0 | 72 h 2/3 m 5 92 | |

0 126 404

Tabelle (Fortsetzung)

Prüfung der Überzüge

| | Beispiel 1 | | Beispiel 2 | | Beispiel 3 | | Vergleichsbeispiel (Beisp. 1 aus DE-OS 29 22 370) | |
|---|---|---|---|---|---|---|---|---|
| Einbrennzeit + Temperatur | 15 ' 150$^\circ$C | 30' 160$^\circ$C | 15' 160$^\circ$C | 30' 160$^\circ$C | 15' 160$^\circ$C | 30' 160$^\circ$C | 15' 160$^\circ$C | 30' 160$^\circ$C |
| Schwitzkasten: 40$^\circ$C beurteilt nach DIN 53209 — 144 h | 2/3 m 5 92 | 0 | | 0 | 0 | 0 | / | |
| 168 h | 2/3 m 5 92 | 0 | | 0 | m 1 91 | 0 | / | |
| 192 h | 2/3 m 5 | 0 | 264 h 1/3 m 3 91 | 240 h m 1 91 | m 1 91 | 0 | / | |
| Viskosität der Lacke (m.Pa.s.) | 6200 | | 6850 | | 5720 | | 6800 | |

0 126 404

## Patentansprüche

1. Verfahren zur Herstellung wäßriger Alkydharzzubereitungen, bei dem man ein Vorkondensat der Säurezahl 50-130 durch Reaktion mit Alkoholen der Funktionalität größer 2 zu einem hydrophilen Alkydharz mit Säurezahl kleiner 40 kondensiert (Reaktionsstufe c) und dieses in Gegenwart von Aminoalkoholen und gewünschtenfalls OH-funktionellen Emulgatoren in Wasser dispergiert, (Reaktionsstufe d), dadurch gekennzeichnet, daß man zur Herstellung des Vorkondensats

a) Fettsäuren und/oder mehrfunktionelle Carbonsäuren oder deren reaktive Derivate mit mehrfunktionellen Alkoholen zu einem Polyester mit Hydroxylendgruppen und Säurezahl kleiner 2 umsetzt und

b) den Polyester durch Reaktion mit mehrfunktionellen Carbonsäuren und/oder deren reaktiven Derivaten in das Vorkondensat mit Säurezahl zwischen 50 und 130 umwandelt.

2. Verfahren nach Anspruch 1, dadurch gekennzeichnet, daß das Vorkondensat (b) eine Säurezahl zwischen 60 und 90 aufweist.

3. Verfahren nach den Ansprüchen 1 und 2, dadurch gekennzeichnet, daß man als Alkohole der Funktionalität größer 2 zur Umsetzung des Vorkondensats mehrfunktionelle Hydroxyverbindungen mit einem Molekulargewicht kleiner 1 000 und 3-10, vorzugsweise 3-6 Hydroxylgruppen sowie bis zu 10 Ethersauerstoffgruppen einsetzt.

4. Verfahren nach den Ansprüchen 1 bis 3, dadurch gekennzeichnet, daß man das Alkydharz (c) bis zu einer Endsäurezahl zwischen 10 und 40, vorzugsweise 15 und 35 und insbesondere 20 bis 25 kondensiert.

5. Verfahren nach den Ansprüchen 1 bis 4, dadurch gekennzeichnet, daß man als OH-funktionelle Emulgatoren die Salze von Aminoalkoholen mit Hydroxyalkoxystearinsäuren mit mindestens einer OH-Gruppe im Alkoxyrest einsetzt.

6. Verfahren nach Anspruch 5, dadurch gekennzeichnet, daß man als OH-funktionelle Emulgatoren die Salze von Aminoalkoholen mit 10,9 und/oder 9,10-Hydroxyalkoxystearinsäuren einsetzt, deren Alkoxyrest sich von mehrfunktionellen Alkoholen mit 3 bis 6 OH-Gruppen, insbesondere von Glycerin, Trimethylolpropan, Pentaerythrit, Sorbit oder den Selbstkondensationsprodukten dieser Alkohole oder den Umsetzungsprodukten dieser Alkohole mit bis zu 10 mol Ethylenoxid pro mol Alkohol ableitet.

7. Verwendung der Alkydharze nach den Ansprüchen 1 bis 5 und deren wäßriger Zubereitungen zur Herstellung von Wasserlacken, insbesondere ofentrocknenden Wasserlacken.

## Claims

1. A process for the production of aqueous alkyd resin preparations, in which a precondensate having an acid number of from 50 to 130 is condensed by reaction with alcohols having a functionality of more than 2 to form a hydrophilic alkyd resin having an acid number below 40 (reaction step c) and the alkyd resin thus obtained is dispersed in water in the presence of aminoalcohols and, if desired, OH-functional emulsifiers (reaction step d), characterized in that to produce the precondensate

a) fatty acids and/or polyfunctional carboxylic acids or reactive derivatives thereof are reacted with polyfunctional alcohols to form a polyester containing terminal hydroxyl groups and having an acid number below 2 and

b) the polyester is converted into the precondensate with an acid number of from 50 to 130 by reaction with polyfunctional carboxylic acids and/or reactive derivatives thereof.

2. A process as claimed in Claim 1, characterized in that the precondensate (b) has an acid number of from 60 to 90.

3. A process as claimed in Claims 1 and 2, characterized in that the more than difunctional alcohols used for the reaction of the precondensate are polyfunctional hydroxy compounds having a molecular weight below 1 000 and containing from 3 to 10 and preferably from 3 to 6 hydroxyl groups and up to 10 ether oxygen groups.

4. A process as claimed in Claims 1 to 3, characterized in that the alkyd resin (c) is condensed to a final acid number of from 10 to 40, preferably from 15 to 35 and, more particularly, from 20 to 25.

5. A process as claimed in Claims 1 to 4, characterized in that the salts of aminoalcohols with hydroxyalkoxy stearic acids containing at least one OH-group in the alkoxy radical are used as the OH-functional emulsifiers.

6. A process as claimed in Claim 5, characterized in that the OH-functional emulsifiers used are the salts of aminoalcohols with 10,9 and/or 9,10-hydroxyalkoxy stearic acids of which the alkoxy radical is derived from polyfunctional alcohols containing from 3 to 6 OH-groups, particularly glycerol, trimethylol propane, pentaerythritol, sorbitol or the autocondensation products of these alcohols or the reaction products of these alcohols with up to 10 moles of ethylene oxide per mole of alcohol.

7. The use of the alkyd resins produced in accordance with Claims 1 to 5 and their aqueous preparations for the production of aqueous lacquers, particularly ovendrying aqueous lacquers.

## Revendications

1. Procédé en vue d'obtenir des préparations aqueuses de résines alkydes, procédé dans lequel on condense (étape réactionnelle c) un précondensat d'un indice d'acide de 50-130 par réaction avec des alcools d'une fonctionnalité supérieure à 2 en une résine alkyde hydrophile d'un indice d'acide inférieur à 40 et l'on disperse cette résine alkyde hydrophile dans l'eau en présence d'amino-alcools et éventuellement d'émulsionnants à fonctionnalité OH (étape réactionnelle d), caractérisé en ce que, pour obtenir le précondensat :

a) on fait réagir des acides gras et/ou des acides carboxyliques polyfonctionnels ou leurs dérivés réactifs avec des alcools polyfonctionnels pour obtenir un polyester comportant des groupes hydroxyle terminaux et ayant un indice d'acide inférieur à 2, et

b) on transforme le polyester en précondensat d'un indice d'acide compris entre 50 et 130 par réaction avec des acides carboxyliques polyfonctionnels et/ou leurs dérivés réactifs.

2. Procédé selon la revendication 1, caractérisé en ce que le précondensat (b) a un indice d'acide compris entre 60 et 90.

3. Procédé selon les revendications 1 et 2, caractérisé en ce que, comme alcools de la fonctionnalité supérieure à 2 pour la réaction de transformation du précondensat, on utilise des hydroxy-composés polyfonctionnels d'un poids moléculaire inférieur à 1 000 et comportant 3-10, de préférence, 3-6 groupes hydroxyle, ainsi que jusqu'à 10 groupes d'oxygène d'éther.

4. Procédé selon les revendications 1 à 3, caractérisé en ce qu'on condense la résine alkyde (c) jusqu'à un indice d'acide final se situant entre 10 et 40, de préférence, entre 15 et 35 et, en particulier, de 20 à 25.

5. Procédé selon les revendications 1 à 4, caractérisé en ce que, comme émulsionnants à fonctionnalité OH, on utilise les sels d'amino-alcools avec des acides hydroxy-alcoxy-stéariques comportant au moins un groupe OH dans le radical alcoxy.

6. Procédé selon la revendication 5, caractérisé en ce que, comme émulsionnants à fonctionnalité OH, on utilise les sels d'amino-alcools avec des acides 10,9- et/ou 9,10-hydroxy-alcoxystéariques dont le radical alcoxy dérive d'alcools polyfonctionnels comportant 3 à 6 groupes OH, en particulier, du glycérol, du triméthylol-propane, du pentaérythritol, du sorbitol et/ou des produits d'auto-condensation de ces alcools ou des produits réactionnels de ces alcools avec jusqu'à 10 moles d'oxyde d'éthylène par mole d'alcool.

7. Utilisation des résines alkydes selon les revendications 1 à 5 et de leurs préparations aqueuses en vue d'obtenir des vernis à l'eau, en particulier, des vernis à l'eau séchant au four.